# EUROPEAN PATENT APPLICATION

(11) **EP 2 741 166 A2**
(43) Date of publication of application: **11.06.2014**
(21) Application number: 12814995.2
(22) Date of filing: 13.07.2012
(51) Int. Cl.: G06F 1/16, H05K 7/16

(54) **MULTI-PIECE FOLDABLE HINGE STRUCTURE**

(30) Priority: 16.07.2011 KR 20110006473 U
(71) Applicant: S-Moon Corporation, Gyeonggi-do 429-450 (KR)
(72) Inventor: KANG, Gi Dong, Gwangmyeong-si Gyeonggi-do 423-010 (KR); SEO, Ho Sung, Seoul 143-190 (KR); KIM, Hak Ho, Seoul 150-104 (KR); SEO, Young Seon, Bucheon-si Gyeonggi-do 420-020 (KR)
(74) Representative: Meissner, Bolte & Partner GbR
(86) International application number: PCT/KR2012/005562
(87) International publication number: WO 2013/012207

(57) **Abstract**

Provided is a multi-piece foldable hinge structure which is configured such that a support having multiple pieces is separately foldable, and each of the multiple pieces of the support are kept in one body in a state of being separated from each other, the hinge structure including: a support (10) having multiple pieces; a lower end fixing body (30) detachably fixed to a lower end of each of the pieces; a connection cord fixing body (50) fixed to the lower end fixing body (30); and a hinge assembly (20) connected to the connection cord fixing body (50) in the inside of the support via a connection cord (40) and detachably fixed at an upper end of the support (10), wherein an upper end of the hinge assembly is fixed to the lower end fixing body (30) of the support that is present just above.

## Description

### Technical Field

The present invention relates, in general, to a multi-piece foldable hinge structure and, more particularly, to a multi-piece foldable hinge structure which is configured such that a support having multiple pieces is separately foldable, and each of the multiple pieces of the support are kept in one body in a state of being separated from each other.

### Background Art

Today, various portable devices have been developed and are widely used. Of these portable devices, cellular phone, MP3 players, PMPs (portable multimedia player), laptop computers, netbook computers, smart phones, tablet PCs and the like are popularly used. Generally, when users of these portable devices go outdoors they carry their portable devices, or when the users come indoors they place their portable devices on a desk or table.

These portable devices enable users to enjoy multimedia information in a state of conveniently holding the device with their hands or to simply perform his or her work by driving other programs in the portable device, and can be used even when users are walking or are riding on a bus or subway.

However, with the development of the iPad as a starting point, tablet PCs have been recently developed, and thus, a user can conveniently use his or her portable device while carrying it outdoors, thereby enabling the user to easily search for information or listen to music while riding on a bus or subway.

The frequency in use of these portable devices indoors as well as outdoors has been continuously increasing, and in order to conveniently use them indoors, a separate holder has been used so that a user can enjoy multimedia contents with his or her portable device placed on a horizontal plane such as a desk and the like.

Although a conventional holder is configured so that the user can enjoy various kinds of multimedia contents in a car or in a state of his or her portable device being placed on a desk without holding it in his or her hand, it is difficult for the holder composed in a single stage form to be changed and fix holding positions of the device as the user wishes, and there is also the inconvenience in that the step of fixing the holder to a desired position should be performed prior to placing the device to be held into the holder.

When the holder has a multi-piece form, the holder adopts in such a way that each of the multiple pieces is foldably put in the inside of the holder of a lower end, but in such a case, a structure in which each of the multiple pieces is slidably put in the inside of a hinge should be, nevertheless it is difficult to form a slidable hinge structure and it is also inconvenient to carry an unslidable ball hinge because such a ball hinge structure is not foldable.

Also, it is problematic in that the support is not foldable when the multiple pieces are formed in the same pipe diameter.

Accordingly, it has been needed to develop a hinge ball structure which can be always maintained or carried in a state of being folded whenever a hinge ball is applied to any support joints regardless of their structure.

### Disclosure

### Technical Problem

An object of the present invention is to provide a multi-piece foldable hinge structure which is configured such that a support is not folded from a lower end to an inner part, but is foldable from the outside, thereby enabling a hinge to be conveniently foldable regardless of joint structures.

The multi-piece foldable hinge structure may be also configured such that each of multiple pieces of the support having the multiple pieces is simply separated from each other and a number of pieces are foldable and while each of the pieces is completely separated, they are designed not to be lost during disassembly.

Another object of the present invention is to provide a multi-piece foldable hinge structure in which each of multiple pieces of a support having the multiple pieces can be easily detached and attached, and can be fixed by a connection cord so as not to be completely separated from each other.

### Technical Solution

In order to accomplish the above objects, the present invention provides a multi-piece foldable hinge structure which is a hinge structure of a multi-piece support having a rotatable joint structure, the hinge structure including: a support 10 having multiple pieces; a lower end fixing body 30 detachably fixed to a lower end of each of the pieces; a connection cord fixing body 50 fixed to the lower end fixing body 30; and a hinge assembly 20 connected to the connection cord fixing body 50 in the inside of the support via a connection cord 40 and detachably fixed at an upper end of the support 10, wherein an upper end of the hinge assembly is fixed to the lower end fixing body 30 of the support that is present just above so that each of the pieces can be separated and folded while forming one body; a ball hinge fixing part 31 is formed in a lower portion of the lower end fixing body 30 to be fixed to an upper end of a ball hinge 22 of the hinge assembly 20; a space part is formed in an upper portion of the lower end fixing body 30; a bolt hole 32 is formed in a side portion of the lower end fixing body 30; a fixing bolt 33 fixed to the connection cord fixing body 50 inserted into the space part by passing through the connection cord fixing body at the same time with the bolt hole; and one end of the connection cord 40 having elasticity is fixed to a ring 52 of the connection cord fixing body 50.

The multi-piece foldable hinge structure may be also characterized in that a pair of holes 21-1 are formed at one lower side of a housing 21 of the hinge assembly 20 to be opposite to each other, and, at an inner side of the housing 21, a stop cap 23 is inserted into the holes 21-1, respectively, wherein the stop cap 23 is supported by each of both ends of a spring support 24 while a spring 25 is inserted into the inner side, the stop cap 23 is inserted into a stop hole 12 of the support by being elastically retracted so that the hinge assembly 20 can be detachably fixed, one end of the connection cord 40 is fixed to the ring 52 of the connection cord fixing body 50, and another end of the connection cord 40 is fixed to the spring support 24.

The multi-piece foldable hinge structure may be also characterized in that a charger 60 is embedded in the inside of a lower end of the support 10 having the multi-pieces, wherein the charger 60 is connected to an upper end of the support 10 at an inner side via a wire 80 so that a connecting jack is formed at an end portion, the wire of the charger 60 is extracted to an outer side at the lower portion of the support 10 so that a plug is formed at the end portion, and the multi-piece foldable hinge structure may be also characterized in that a speaker 70 is embedded in the inside of a pipe 11 of the support 10 having the multi-pieces, wherein the speaker 70 is connected to the upper end of the support 10 at the inner side via the wire 80 so that the connecting jack is formed at the end portion, and the wire of the speaker 70 is extracted to an outer side at the lower portion of the support 10 so that a plug is formed at the end portion.

### Advantageous Effects

According to the present invention, it is advantageous in that when a ball hinge assembly is separated from a support, the ball hinge assembly is fixed not to be completely separated therefrom in a folded state because it is connected to a lower end fixing body via a connection cord having elasticity.

It is also advantageous in that the ball hinge assembly can be conveniently separated from the support because it is detachably fixed to the support via a stop cap which is elastically fixed to the ball hinge assembly.

Since the connection cord is made of a material having elasticity, it has an effect that it always pulls the lower end fixing body and the ball hinge assembly, and thus even though two adjacent pieces of the support are converted into a direction of 180°, the elastic force acts in a direction in which the connection cord pulls the lower end fixing body and the ball hinge assembly even in a state of the pieces being separated from each other.

### Description of Drawings

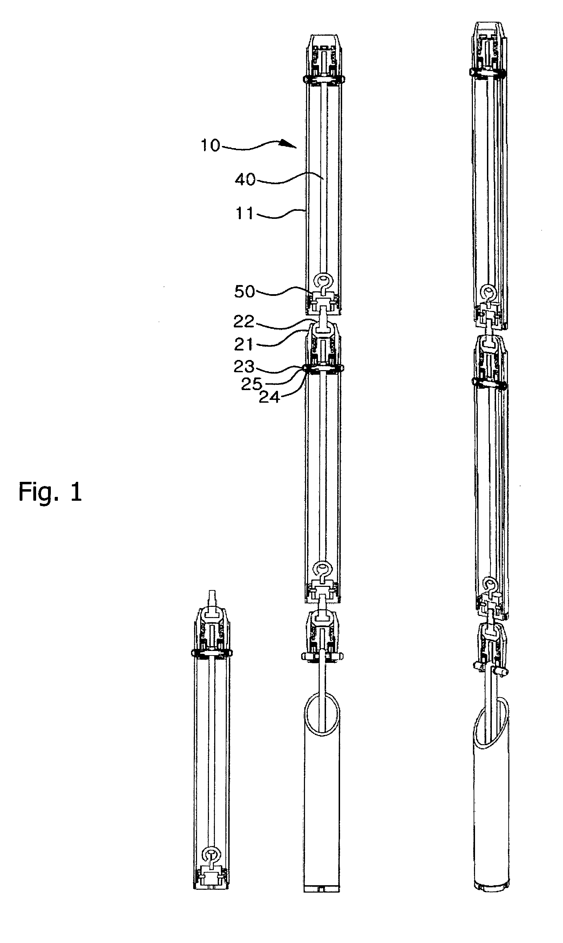

FIG. 1 is a cross-sectional view illustrating a multi-piece foldable hinge structure according to the present invention;

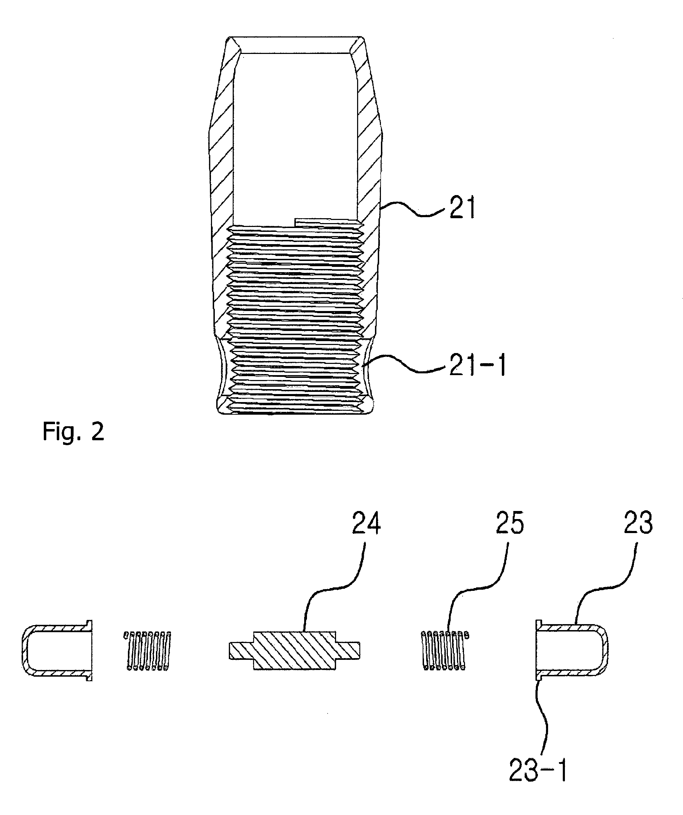

FIG. 2 is an exploded perspective view illustrating a hinge housing and a stop cap of the multi-piece foldable hinge structure according to the present invention;

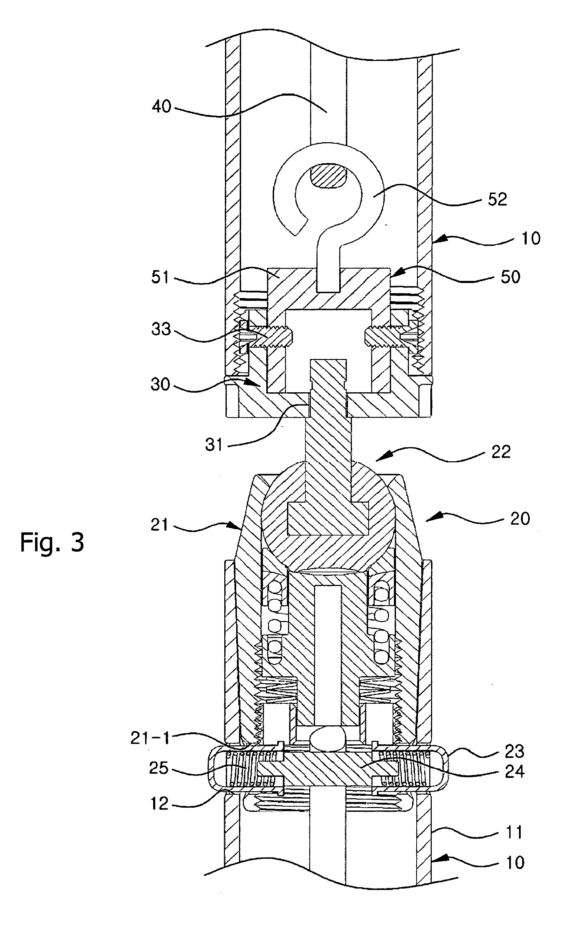

FIG. 3 is an enlarged view illustrating a cross section of the multi-piece foldable hinge structure according to the present invention;

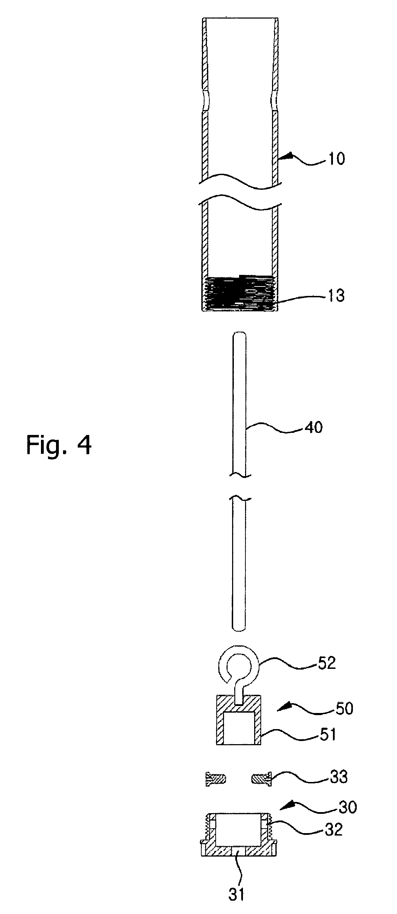

FIG. 4 is an exploded perspective view illustrating a lower fixing body of the multi-piece foldable hinge structure according to the present invention;

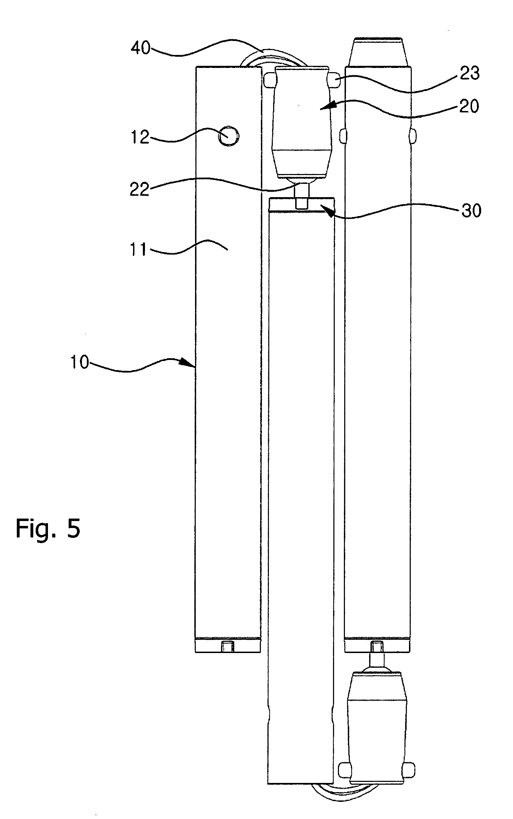

FIG. 5 is a front view illustrating a folded state of the multi-piece foldable hinge structure according to the present invention;

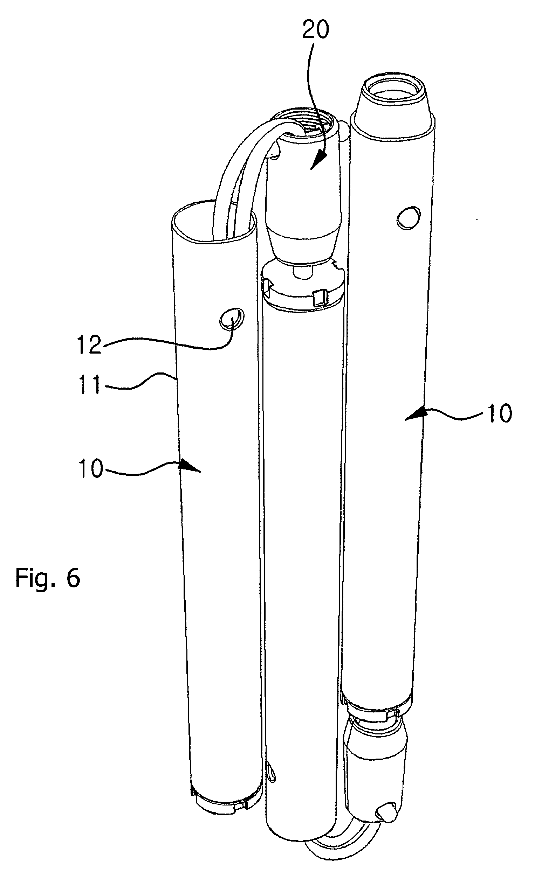

FIG. 6 is a perspective view illustrating a folded state of the multi-piece foldable hinge structure according to the present invention

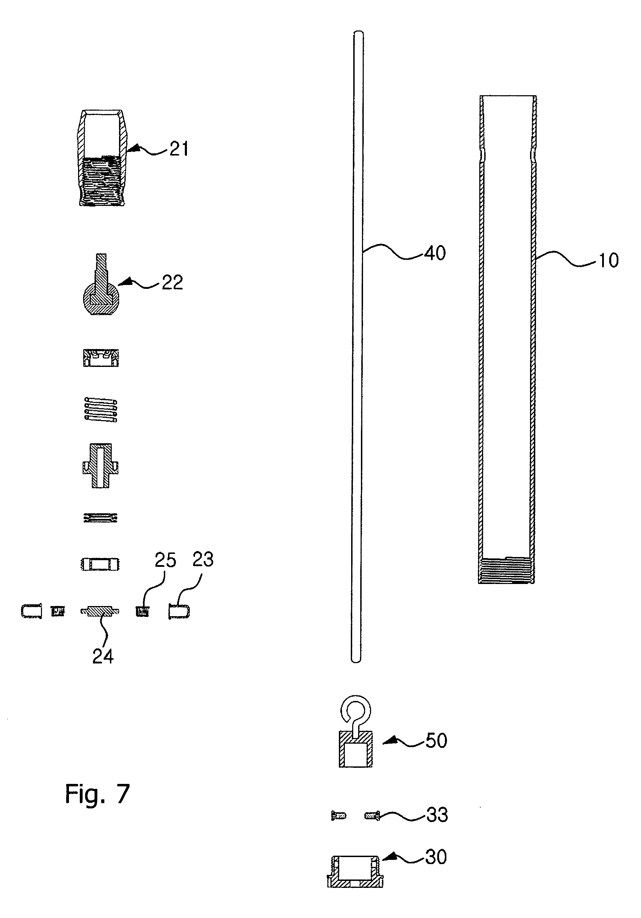

FIG. 7 is an exploded perspective view illustrating the multi-piece foldable hinge structure according to the present invention; and

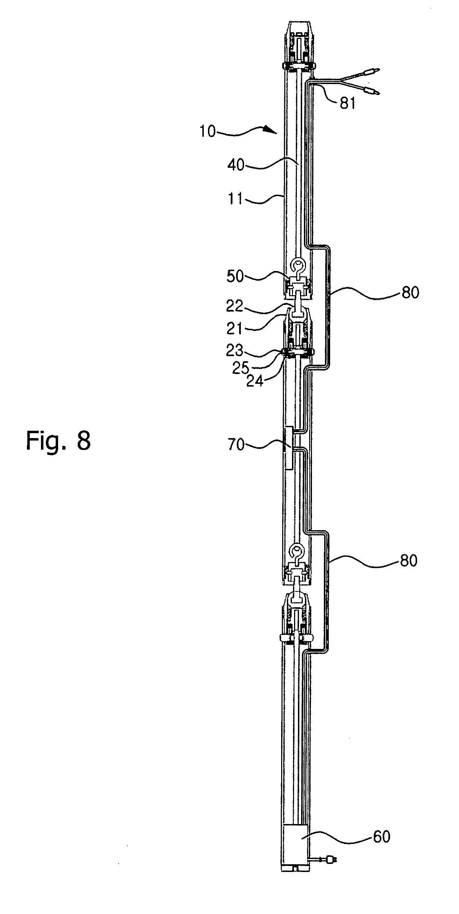

FIG. 8 is a cross-sectional view illustrating an embodiment of the multi-piece foldable hinge structure according to the present invention in which a charger and a speaker are mounted.

### Mode for Invention

Hereinbelow, configurations and operations of the present invention will be described in detail with reference to the accompanying drawings. The terminologies or words used in the description and the claims of the present invention should be interpreted based on the meanings and concepts of the invention in keeping with the scope of the invention based on the principle that the inventor(s) can appropriately define the terms in order to describe the invention in the best way.

A multi-piece foldable hinge structure according to the present invention settles a problem that a support having multi-pieces is not foldable when it is used in the same pipe diameter, and is configured such that a lower end fixing body 30 is detachably fixed to a lower end of each of the pieces of the support 10 having the multi-pieces, and a hinge assembly 20 is connected to a connection cord fixing body 50 fixed to the lower end fixing body 30 in the inside of the support 10 via a connection cord 40 to be detachably fixed to an upper end of the support 10.

An upper end of the hinge assembly 20 is fixed to the lower end fixing body 30 of the support which is present just above, so that the pieces are separated from each other and are folded while forming one body.

The hinge assembly 20 is configured such that a constitution which enables a ball hinge 22 to be rotated is embedded in the inside of the housing 21, and one embodiment of this constitution is illustrated in the drawing. The detailed description thereon is omitted.

A ball hinge fixing part 31 is formed in a lower portion of the lower end fixing body 30 to be fixed to an upper end of the ball hinge 22 of the hinge assembly 20, and a space part is formed in an upper portion of the lower end fixing body 30 so that the connection cord fixing body 50 can be inserted into the space part.

At this time, a bolt hole 32 is formed at a side portion of the lower end fixing body 30 so that a fixing bolt 33 passes through the connection cord fixing body 50 inserted into the space part at the same time with the bolt hole, and a ring 52 is formed in an upper portion of the connection cord fixing body 50. One end of the connection cord 40 having elasticity is fixed to the ring 52, and another end of the connection cord 40 is fixed to a spring support 24 formed at a lower portion of the hinge assembly 20.

A pair of holes 21-1 are formed at one side of the lower portion of the hinge assembly 20 to be opposite each other, and a stop cap 23 is inserted into the holes 21-1 at an inner side of the housing 21, respectively. A raised part 23-1 is formed at an end portion of the stop cap 23 so that the stop cap 23 is not completely separated toward an outer side of the holes 21-1. Furthermore, the inside of the stop cap 23 is vacant so that a part of the spring 25 can be inserted thereto.

The stop cap 23 is supported by each of both ends of a spring support 24 while a spring 25 is inserted into an inner side, and a raised part for hanging the spring 25 is formed at both sides of the spring support 24. Furthermore, as described above, the connection cord 40 is suspended in and supported by the center of the spring support 24.

When the stop cap 23 is elastically retracted and is then inserted into the stop hole 12 by entering the inside of the support at the upper end of the support 10, it is fixed to the stop hole 12 to protrude to the outside due to elasticity. Thanks to this structure, the hinge assembly 20 is detachably fixed to the support 10.

Furthermore, an embodiment for convenience can be applied as follows.

A charger 60 is embedded in the inside of a lower end of the support 10 having the multi-pieces, and the charger 60 is connected to an upper end of the support 10 at an inner side via a wire 80, so that a connecting jack is formed at an end portion. The connecting jack may be connected to various devices fixed at the upper end of the support.

Furthermore, the wire of the charger 60 is extracted to the outer side at a lower portion of the support 10 so that a plug is formed at the end portion, and the plug is used in a state of being inserted into an electrical outlet.

Furthermore, according to another embodiment, a speaker 70 is embedded in the inside of a pipe 11 of the support 10, the speaker 70 is connected to the upper end of the support 10 at the inner side via the wire 80 so that the connecting jack is formed at the end portion, and the wire of the speaker 70 is extracted to the outer side at the lower portion of the support 10 so that the plug can be formed at the end portion.

When the aforesaid charger 60 and speaker 70 are formed together, the wire may be formed in one body.

| | | | |
|---|---|---|---|
| 10: | Support | 11: | Pipe |
| 12: | Stop hole | 13: | Screw thread |
| 20: | Hinge assembly | 21: | Housing |
| 21-1: | Hole | 22: | Ball hinge |
| 23: | Stop cap | 23-1: | Raised part |
| 24: | Spring support | 25: | Spring |
| 30: | Lower end fixing body | 31: | Ball hinge fixing part |
| 32: | Bolt hole | 33: | Fixing bolt |
| 40: | Connection cord | 50: | Connection cord fixing body |
| 51: | Body | 52: | Ring |
| 60: | Charger | 70: | Speaker |
| 80: | Wire | 81: | Rubber fixing ring |

## Claims

1. A multi-piece foldable hinge structure which is a hinge structure of a multi-piece support having a rotatable joint structure, the hinge structure including:
a support (10) having multiple pieces;
a lower end fixing body (30) detachably fixed to a lower end of each of the pieces;
a connection cord fixing body (50) fixed to the lower end fixing body (30); and
a hinge assembly (20) connected to the connection cord fixing body (50) in the inside of the support via a connection cord (40) and detachably fixed at an upper end of the support (10),
wherein an upper end of the hinge assembly is fixed to the lower end fixing body (30) of the support that is present just above so that each of the pieces can be separated and folded while forming one body.

2. The hinge structure of claim 1, wherein a ball hinge fixing part (31) is formed in a lower portion of the lower end fixing body (30) to be fixed to an upper end of a ball hinge (22) of the hinge assembly (20), a space part is formed in an upper portion of the lower end fixing body (30), a bolt hole (32) is formed in a side portion of the lower end fixing body (30) so that a fixing bolt (33) is fixed to the connection cord fixing body (50) inserted into the space part by passing through the connection cord fixing body at the same time with the bolt hole, and one end of the connection cord (40) having elasticity is fixed to a ring (52) of the connection cord fixing body (50).

3. The hinge structure of claim 1 or 2, wherein a pair of holes (21-1) are formed at one lower side of a housing (21) of the hinge assembly (20) to be opposite to each other, and, at an inner side of the housing (21), a stop cap (23) is inserted into the holes (21-1), respectively, wherein the stop cap (23) is supported by each of both ends of a spring support (24) while a spring (25) is inserted into the inner side, and the stop cap (23) is inserted into a stop hole (12) of the support by being elastically retracted so that the hinge assembly (20) can be detachably fixed.

4. The hinge structure of claim 3, wherein one end of the connection cord (40) is fixed to the ring (52) of the connection cord fixing body (50), and another end of the connection cord (40) is fixed to the spring support (24).

5. The hinge structure of claim 1 or 2, wherein a charger (60) is embedded in the inside of a lower end of the support (10) having the multi-pieces, wherein the charger (60) is connected to an upper end of the support (10) at an inner side via a wire (80) so that a connecting jack is formed at an end portion, and the wire of the charger (60) is extracted to an outer side at the lower portion of the support (10) so that a plug is formed at the end portion.

6. The hinge structure of claim 1 or 2, wherein a speaker (70) is embedded in the inside of a pipe (11) of the support (10) having the multi-pieces, wherein the speaker (70) is connected to the upper end of the support (10) at the inner side via a wire (80) so that a connecting jack is formed at an end portion, and the wire of the speaker (70) is extracted to an outer side at the lower portion of the support (10) so that a plug is formed at the end portion.
